(19) Europäisches Patentamt
European Patent Office
Office européen des brevets

(11) **EP 2 441 139 B1**

(12) **EUROPÄISCHE PATENTSCHRIFT**

(45) Veröffentlichungstag und Bekanntmachung des Hinweises auf die Patenterteilung:
**29.08.2018   Patentblatt 2018/35**

(51) Int Cl.:
*H01S 3/067* (2006.01)          *C03B 37/018* (2006.01)
*G02B 6/036* (2006.01)

(21) Anmeldenummer: **10721176.5**

(86) Internationale Anmeldenummer:
**PCT/EP2010/058045**

(22) Anmeldetag: **09.06.2010**

(87) Internationale Veröffentlichungsnummer:
**WO 2010/142706 (16.12.2010 Gazette 2010/50)**

(54) **LICHTLEITFASER ENTHALTEND EINEN DOTIERTEN GLASFASERKERN UND EIN DEN GLASFASERKERN UMGEBENDES CLADDING**

OPTICAL FIBER CONTAINING A DOPED GLASS FIBER CORE AND CLADDING AROUND THE FIBERGLASS CORE

FIBRE OPTIQUE COMPORTANT UN COEUR EN FIBRE DE VERRE DOPÉ ET UNE GAINE ENTOURANT LEDIT COEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.06.2009   DE 102009025168**

(43) Veröffentlichungstag der Anmeldung:
**18.04.2012   Patentblatt 2012/16**

(73) Patentinhaber: **J-Fiber GmbH**
**07751 Jena (DE)**

(72) Erfinder:
 • **HÄMMERLE, Wolfgang**
   **07745 Jena (DE)**
 • **BREHM, Lothar**
   **07743 Jena (DE)**
 • **AUTH, Matthias**
   **45289 Essen (DE)**
 • **POPPITZ, Elke**
   **07745 Jena (DE)**

(74) Vertreter: **Kruspig, Volkmar et al**
**Meissner Bolte Patentanwälte**
**Rechtsanwälte Partnerschaft mbB**
**Berliner Straße 1**
**07545 Gera (DE)**

(56) Entgegenhaltungen:
**EP-A1- 1 035 083     WO-A1-03/062881**
**GB-A- 2 273 389**

 • **KIRCHHOF J ET AL: "Materials for high-power fiber lasers" JOURNAL OF NON-CRYSTALLINE SOLIDS, NORTH-HOLLAND PHYSICS PUBLISHING. AMSTERDAM, NL LNKD-DOI:10.1016/J.JNONCRYSOL.2006.02.061, Bd. 352, Nr. 23-25, 15. Juli 2006 (2006-07-15), Seiten 2399-2403, XP025186777 ISSN: 0022-3093 [gefunden am 2006-07-15]**

**Beschreibung**

Die Erfindung betrifft eine Lichtleitfaser enthaltend einen dotierten Glasfaserkern und ein den Glasfaserkern umgebendes Cladding nach Anspruch 1.

Lichtleitfasern, insbesondere Laserfasern, bestehen im allgemeinen aus einem Glasfaserkern und mindestens einem Cladding, das bei Laserfasern als Pumpkern dient. Dieser Aufbau wird im weiteren durch eine Polymerschicht vor Umgebungseinflüssen geschützt. Der Glasfaserkern und das Cladding bestehen chemisch im wesentlichen aus Siliziumoxid. Um die Wellenleitung des Pumpkernes zu gewährleisten, besteht die Polymerschicht aus einem Material, dessen Brechzahl kleiner als die Brechzahl von Siliziumoxid ist.

Bei aus dem Stand der Technik bekannten Laserfasern ist der Glasfaserkern mit mindestens einem Seltenen-Erd-Element und mindestens einem weiteren Dotanden dotiert. Der oder die zusätzlichen Dotanden dienen als Lösungsvermittler für das Seltene-Erd-Element in der aus Siliziumoxid bestehenden Glasmatrix und sollen zusätzliche Eigenschaften der Faser, insbesondere einen so genannten Photodarkening Effekt, günstig beeinflussen.

Lichtleitfasern, insbesondere Laserfasern, weisen in ihrem Kern üblicherweise ein stufenförmiges Brechzahlprofil auf. Der Kern kann dabei aus mehreren Kernschichten bestehen. Die Kernschichten werden beispielsweise mit einem Verfahren zur chemischen Gasphasenabscheidung in Kombination mit dem Tränkverfahren gefertigt. Die hohe Komplexität der Fertigung bringt es allerdings mit sich, dass nur wenige Kernschichten abgeschieden werden können. Daher ist die Realisierung von graduierten Kernbrechzahlprofilen aus fertigungstechnologischen Gründen nur mit einem extremen Aufwand und einer sehr geringen Ausbeute möglich und wird deshalb praktisch nicht angewendet.

Die Löslichkeit von Seltenen-Erd-Elementen in reinem Siliziumoxid ist üblicherweise auf wenige 100 mol-ppm beschränkt, kann jedoch durch den Einsatz von Lösungsvermittlern wie z.B. Aluminium oder Phosphor verbessert werden. Deshalb sind Lösungsvermittler als Kodotanden im Kernbereich von Seltenen-Erd-dotierten Laserfasern allgemein üblich und notwendig. Die als Lösungsvermittler verwendeten Dotanden verursachen zusammen mit dem dotierten Selten-Erd-Element allerdings in der Preformkern- bzw. in der Faserkern-Grenzfläche mechanische Spannungen. Diese führen bei höheren Lösungsvermittler- bzw. Selten-Erd-Elementkonzentrationen zu unerwünschten Glasdefekten bei der Herstellung und Verarbeitung der Lichtleitfaser. Vor allem treten mechanischen Spannungen in der Grenzfläche zwischen dem Kern und dem Cladding auf, die zur Zerstörung der Preform bzw. der Faser führen können.

Weiterhin müssen Lichtleitfasern, die als Laserfasern für den Hochleistungsbereich vorgesehen sind, so gestaltet sein, dass unerwünschte nichtlineare optische Effekte wie z.B. der so genannte Raman - oder der so genannte Brillouin-Effekt, unterdrückt werden. Das erfolgt im einfachsten Falle dadurch, indem die Laserfaser möglichst kurz gehalten wird, weil die Stärke vieler nichtlinearer Effekte mit der Laserfaserlänge skaliert.

Um bei einer Laserfaser für den Hochleistungsbereich kurze Faserlängen von typischerweise 10 m zu realisieren, muß die Absorption im Cladding möglichst hoch sein und beispielsweise 1,5 dB/m betragen. Die benötigte hohe Claddingabsorption kann prinzipiell über zwei Wege erreicht werden:

  1. Es wird eine hohe Kernabsorption der Laserfaser angestrebt. Dies wird durch eine hohe Selten-Erd-Konzentration im Laserkern erreicht.
  2. Es wird ein möglichst kleines Verhältnis zwischen der Claddingfläche zur Kernfläche realisiert.

Im Interesse einer großen Einkoppelfläche von Pumpstrahlung in den Pumpkern bzw. das Cladding muss damit die Querschnittsfläche des Kerns entsprechend zunehmen. Der Vergrößerung der Kernfläche sind jedoch technologische Grenzen gesetzt. Zum einen muss bei der Vergrößerung des Kernquerschnittes beachtet werden, dass die so genannte Monomodigkeit des Kerns und damit eine dadurch gewährleistete gute Strahlqualität erhalten bleibt. Deshalb muss mit der Vergrößerung der Kernfläche gleichzeitig die numerische Apertur des Laserkerns entsprechend der Gleichung

$$2\pi \cdot a \cdot NA / \lambda = const.$$

abgesenkt werden. Dabei ist a der Radius des Kerns, NA dessen numerische Apertur und $\lambda$ die Wellenlänge des in dem Kern zu leitenden Lichtes. Fasern mit einem rel. großen Kerndurchmesser und einer relativ kleinen numerischen Apertur des Kerns werden üblicherweise Large-Mode-Area-Fasern (LMA-Fasern) genannt. Einer Absenkung der numerischen Apertur auf Werte unterhalb von ca. 0,05 sind jedoch insbesondere bei Verwendung des chemischen Gasphaseabscheide-Verfahrens in Kombination mit der Tränkdotierung technologische Grenzen gesetzt.

Bei einer Vergrößerung der Kernabsorption durch Steigerung der Seltenen-Erd-Konzentration wächst auch die Brechzahl des Kernes, weil Seltene-Erd-Elemente als brechzahlerhöhende Dotanden wirken. Hinzu kommt, dass Seltene-Erd-Verbindungen, insbesondere das in Hochleistungs-Laserfasern üblicherweise verwendete Ytterbium-III-oxid, $Yb_2O_3$, einen gegenüber den anderen üblicherweise verwendeten Kern-Dotanden besonders hohen thermischen Ausdehnungskoeffizienten aufweisen (F.Just, H.-R. Müller, H-Bartelt; Mechanical stresses in rare-earth doped fiber preforms, DGaO-Proceedings 2008).

So liegt beispielsweise der thermische Ausdehnungskoeffizient von $Yb_2O_3$ bei einem Wert von $4,1 \cdot 10^{-7}$ $(K.mol\%)^{-1}$ deutlich über den thermischen Ausdehnungskoeffizienten der üblicherweise eingesetzten Kodotanden $Al2O3$, $P2O5$, $GeO_2$, $B_2O_3$. Durch eine hohe Ytterbium-Dotierung im Kernbereich werden dadurch gegenüber dem undotierten Claddingbereich so hohe mechanische Spannungen erzeugt, dass der Preform- bzw. Faserkern während der Abkühlphase zerspringen kann.

Eine Darstellung der Änderung des thermischen Ausdehnungskoeffizienten bezogen auf die Dotandenkonzentration ist für verschiedene Dotanden in folgender Tabelle gezeigt:

| Dotand | Änderung des thermischer Ausdehnungskoeffizient bezogen auf die Dotandenkonzentration |
|---|---|
| $Yb_2O_3$ | $4,1*10^{-7}$ $1/(K*mol\%)$ |
| $P_2O_5$ | $1,51*10^{-7}$ $1/(K*mol\%)$ |
| $Al_2O_3$ | $0,53*10^{-7}$ $1/(K*mol\%)$ |
| $SiF_4$ | $-0,5*10^{-7}$ $1/(K*mol\%)$ |

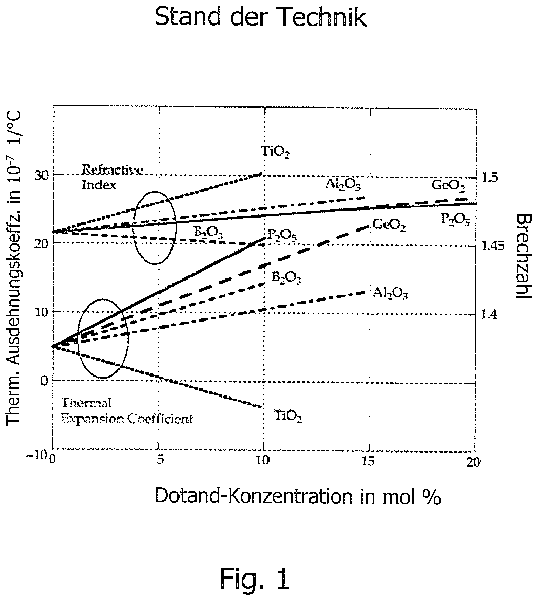

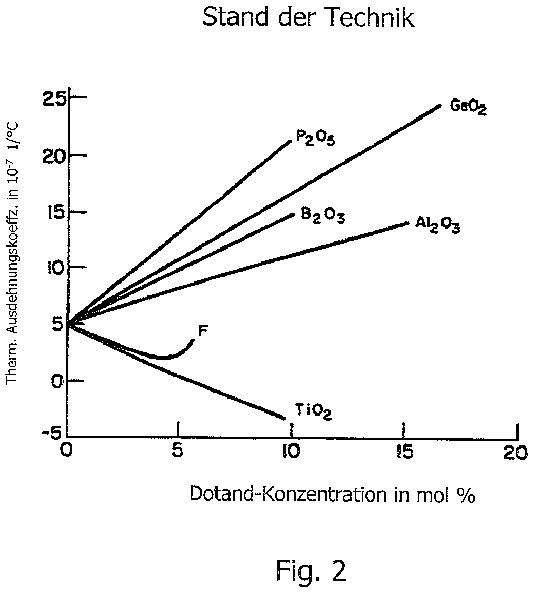

Eine beispielhafte Übersicht einer Abhängigkeit der Brechzahl und des thermischen Ausdehnungskoeffizienten eines dotierten Silizium-Glases ist in Fig. 1 für verschiedene Kodotanden dargestellt (Chin-Lin Chen, Foundations for guided-wave optics, Wiley Interscience 2007, p. 283). Fig. 2 zeigt beispielhafte thermische Ausdehnungskoeffizienten für dotiertes Quarzglas in Abhängigkeit von einigen Kodotanden.

Weiterhin müssen Laserfasern, die für einen Einsatz im Hochleistungsbereich vorgesehen sind, sich durch geringe Photodarkening-Verluste auszeichnen, um langzeit-stabil arbeiten zu können. Damit eine Laserfaser ein geringes Photodarkening zeigt, wird der Laserkern neben den Seltenen-Erd-Elementen im allgemeinen mit mindestens einem weiteren Kodotanden dotiert. In besonderer Weise haben sich in diesem Zusammenhang hohe $Al_2O_3$ und/oder $P_2O_5$-Konzentrationen (3 bis 10 mol%) bewährt (S.Jetschke, Photodarkening in Yb-dotierten Lichtleitfasern, IPHT Vortrag, 13.06.2008). Um eine hinreichend hohe Löslichkeit der Selten-Erd-Elemente in der Glasmatrix sicherzustellen sind ebenfalls hinreichend große Mengen von Kodotanden z.B. $Al_2O_3$ oder $P_2O_5$ erforderlich. Laserfasern erreichen im Laserbetrieb bei hohen Laserausgangsleistungen (1800 W) im Kernbereich Temperaturen von bis zu ca. 634 °C und darüber (D.C.Brown, H.J.Hoffmann, Thermal, Stress, and Thermo-Optic Effects in High Average Power Double-Clad Silica Fiber Lasers, IEEE Journal of Quantum Electronics, Vol. 37, 2.February 2001, pp. 207-217). Die dabei im Faserkern erzeugte Wärme muss abgeführt werden. Hochleistungsfasern werden daher meist von außen aktiv oder passiv gekühlt, um die im Kernbereich generierte Wärme abzuleiten und die thermische Zerstörung der äußeren Polymerbedeckung zu vermeiden. Durch die äußere Kühlung und die hohe thermische Belastung im Faserkern treten allerdings wiederum starke thermische und durch die Dotanden im allgemeinen verstärkte Spannungen auf, die zu einer mechanischen Zerstörung des Faserkernes führen können. Das Zerspringen des Faserkernes wird bei Fasern, die als Kernglas $Al2O3$-$P_2O_5$-$Yb_2O_3$-$SiO_2$ durch die hohe Kristallisationsneigung von Spezies des Typs $AlPO_4$ bzw. $Al(OP)_4$ oder $P(OAl)_4$ des Kernglasses insbesondere bei langsamer Abkühlung begünstigt. Daher kann es bereits bei der Preformfertigung oder dem anschließenden Faserziehprozess zu Kristallisationen und zu einer spannungsbedinger Zerstörung des Faserkernes kommen (C.C.de Araujo, L.Zhang, H-Eckert, Sol-gel preparation of AlPO4-SiO2 glasses with high surface mesoporous structure, J.Mater.Chem. 2006, No. 16, p. 1323-1331). Durch die mechanischen Spannungen in der Kern/Cladding-Grenzfläche können Kristallisationskeime entstehen, die die Voraussetzung für die Glaskristallisation bilden und sich insbesondere in Hinblick auf den negativen Effekt des Photodarkenings bemerkbar machen.

Weiterer Stand der Technik ist aus der Druckschrift GB 2 273 389 A bekannt. Aus dem Vorgenannten ergibt sich die der Erfindung zugrunde liegende Aufgabe, eine Lichtleitfaser mit einem dotierten Glasfaserkern und einem den Glasfaserkern umgebenden Cladding anzugeben, bei denen die erwähnten Brüche und Zerstörungsprozesse vermieden werden und eine hohe Betriebsstabilität der Faser auch über lange Betriebsdauern erreicht werden kann.

Die Aufgabe wird erfindungsgemäß mit einer Lichtleitfaser enthaltend einen dotierten Glasfaserkern und ein den Glasfaserkern umgebendes Cladding mit den Merkmalen des Anspruchs 1 gelöst. Die Unteransprüche enthalten jeweils zweckmäßige und/oder vorteilhafte Ausführungsformen der Lichtleitfaser. Es ist eine Lichtleitfaser, enthaltend einen dotierten Glasfaserkern und ein den Glasfaserkern umgebendes Cladding mit einem vom Faserkern nach außen abnehmenden Brechzahlprofil vorgesehen. Erfindungsgemäß zeichnet sich dieser Aufbau durch mindestens eine zwischen dem Glasfaserkern und dem Cladding angeordnete, mechanische Spannungen zwischen dem Glasfaserkern und dem Cladding reduzierende Zwischenschicht aus.

Der erfindungsgemäßen Lichtleitfaser liegt der Gedanke zugrunde, die mechanischen Spannungen zwischen dem notwendigerweise dotierten Glasfaserkern und dem undotierten Cladding dadurch abzufangen, indem zwischen diese beiden in ihren Eigenschaften grundsätzlich vorgegebenen Schichten mindestens eine Zwischenschicht eingefügt wird, die an den Glasfaserkern und/oder an das Cladding anbindet, dabei die mechanischen Spannungen zwischen diesen beiden Schichten bzw. an den Grenzflächen aufnimmt und ausgleicht und somit insgesamt den gesamten Faseraufbau stabilisiert.

Hierzu weist die mindestens eine Zwischenschicht zweckmäßigerweise eine Zwischenschichtdotierung auf, die einen stufenförmigen mechanischen Spannungsverlauf zwischen dem Glasfaserkern und dem Cladding sichert. Zugleich weist die mindestens eine Zwischenschicht eine Zwischenschicht-Kodotierung auf, die einer brechzahlerhöhenden Wirkung der Zwischenschichtdotierung entgegenwirkt.

Durch diese Ausführungsform werden somit die mechanischen Spannungen an der Grenzfläche zwischen dem Glasfaserkern und dem Cladding bzw. der Rohrinnenschicht in eine erste, nicht zerstörende Teilspannung zwischen dem Glasfaserkern und der mindestens einen Zwischenschicht einerseits und in eine zweite nicht zerstörende Teilspannung zwischen der mindestens einen Zwischenschicht und dem Cladding oder der Rohrinnenschicht andererseits aufgeteilt. Anders als bei dem herkömmlichen Faseraufbau wird im hier vorliegenden Fall somit die gesamte Grenzflächenspannung zwischen Faserkern und Cladding über den Raum der Zwischenschicht verteilt.

Zu diesem Zweck weist die mindestens eine Zwischenschicht die Zwischenschichtdotierung auf, die der Zwischenschicht die für diese Funktion notwendige mechanische Beschaffenheit verleiht. Um die dadurch bewirkte Zunahme der Brechzahl in der Zwischenschicht auszugleichen und somit eine unbeeinträchtigte Lichtleitung im Glasfaserkern zu gewährleisten, ist in der Zwischenschicht die Zwischenschicht-Kodotierung vorgesehen. Diese beeinflusst nicht die mechanischen Eigenschaften der Zwischenschicht, sondern korrigiert lediglich die Brechzahl der Zwischenschicht auf einen für die Lichtleitung in der Faser notwendigen Wert.

Insbesondere weist die mindestens eine Zwischenschicht einen thermischen Ausdehnungskoeffizienten auf, dessen Wert zwischen einem Wert eines Ausdehnungskoeffizienten des Glasfaserkerns und einem Wert eines Ausdehnungskoeffizienten des Claddings liegt. Das dadurch entstehende Wärmeausdehnungsprofil zwischen dem Glasfaserkern über die Zwischenschicht in das Cladding bedingt eine Zunahme der Wärmefestigkeit der Lichtleitfaser insgesamt und führt zu einer höheren mechanischen Widerstandsfähigkeit der Faser bei einer anliegenden äußeren Kühlung.

Bei einer zweckmäßigen Ausführungsform weist der Glasfaserkern eine Kerndotierung mit einem Kerndotanden, enthaltend wenigstens ein aktives Lasermedium, vorzugsweise ein Selten-Erd-Element, und/oder ein d-Gruppen-Element und einem Lösungsvermittler auf. Der Kerndotand ist bei einer Ausführungsform Ytterbiumoxid und/oder der Lösungsvermittler ist ein Oxid eines Elementes der dritten und/oder fünften Hauptgruppe.

Die Zwischenschichtdotierung enthält bei einer Ausführungsform einen Zwischenschichtdotanten in Form eines Oxids eines Elementes vorzugsweise der dritten und/oder fünften Hauptgruppe, die Zwischenschicht-Kodotierung einen Zwischenschicht-Kodotanten in Form eines Halogenids, vorzugsweise eine Fluorids.

Bei einer zweckmäßigen Ausführungsform sind zwei Zwischenschichten vorgesehen. Dabei weisen die Werte der thermischen Ausdehnungskoeffizienten der ersten Zwischenschicht und der zweiten Zwischenschicht ein stufenförmiges Profil auf, wobei ein unterschiedliches Mengenverhältnis zwischen dem Zwischenschichtdotanten und dem Zwischenschicht-Kodotanden in der ersten und der zweiten Zwischenschicht vorgesehen ist.

In einem derartigen Fall ist somit innerhalb des Bereichs der Zwischenschichten eine weitere Grenzschicht vorgesehen, an der die mechanischen Spannungen weiter aufgeteilt sind. Beide Zwischenschichten weisen dazu verschiedene thermische Ausdehnungskoeffizienten auf, deren Werte durch die Zwischenschichtdotanten eingestellt sind. Da in diesem Fall in beiden Zwischenschichten die durch die Zwischenschicht-Dotanten beeinflussten Brechzahlen durch die Zwischenschicht-Kodotanten auszugleichen sind, weisen beide Zwischenschichten jeweils verschiedene Mengenverhältnisse zwischen den beiden Dotierkomponenten auf.

Bei einer weiteren Ausführungsform ist zwischen der mindestens einen Zwischenschicht und der vorgesehenen Kernschicht wenigstens eine Diffusionszone ausgebildet, in welcher wenigstens ein Inhaltsstoff in oder aus der Kernschicht ein- oder ausdiffundiert ist. Bei diesem Ausführungsbeispiel dient die mindestens eine Zwischenschicht somit neben ihrer stabilisierenden und spannungsausgleichenden Wirkung auch dazu, mindestens einen Teil der Kernschicht gezielt chemisch zu beeinflussen und dort Inhaltsstoffe per Diffusion entweder einzutragen oder die Kernschicht gezielt um diese Inhaltsstoffe zu verarmen. Dadurch können weitere optische Vorteile, insbesondere in Hinblick auf die Numerische Apertur sowie die Brechzahlprofilform des Kernes der Lichtleitfaser, erreicht werden.

Dabei weist die Konzentration des Inhaltsstoffes bei einer Ausführungsform einen radialen Gradienten auf. Es ist aber auch möglich, dass bei einer weiteren Ausführungsform der Kern gleichmäßig von dem Inhaltsstoff durchsetzt ist. In einem derartigen Fall füllt die Diffusionsschicht die Kernschicht praktisch vollständig aus.

Die Zwischenschicht kann auch als eine nur vorübergehende Barriereschicht während des Herstellungsprozesses der Lichtleitfaser ausgebildet sein.

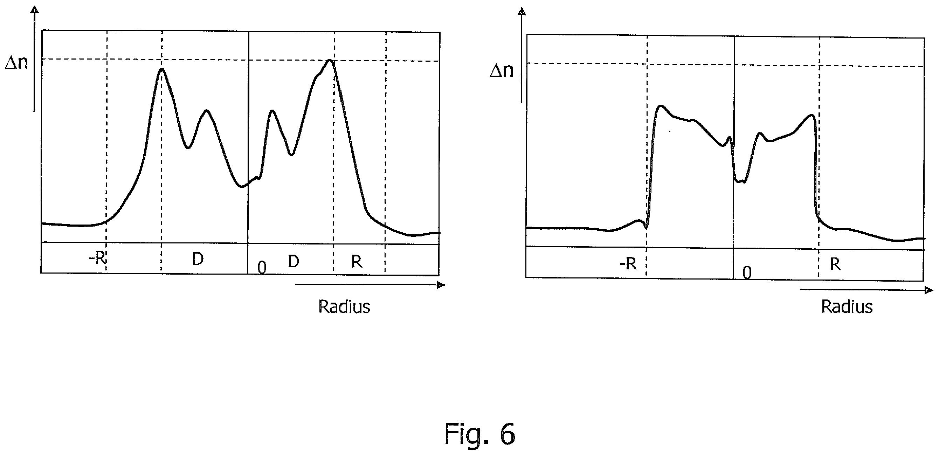

Die erfindungsgemäße Glasfaser sollen nachfolgend anhand von Ausführungsbeispielen näher erläutert werden. Zur Verdeutlichung dienen die beigefügten Figuren 3 bis 6. Es werden für gleiche bzw. gleichwirkende Teile die selben

Bezugzeichen verwendet.
Es zeigen:

Fig. 3    einen Querschnitt eines beispielhaften als Laserleiter ausgebildeten Lichtleiters,
Fig. 4    einen Querschnitt eines beispielhaften als Laserleiter ausgebildeten Lichtleiters mit zwei Zwischenschichten,
Fig. 5    einen schematischen Verlauf einer normierten Brechzahldifferenz des Glasfaserkernes, der sich anschließenden Zwischenschichten, sowie die Differenz des thermischen Ausdehnungskoeffizienten des Glasfaserkerns und der Zwischenschichten im Vergleich zu dem Cladding,

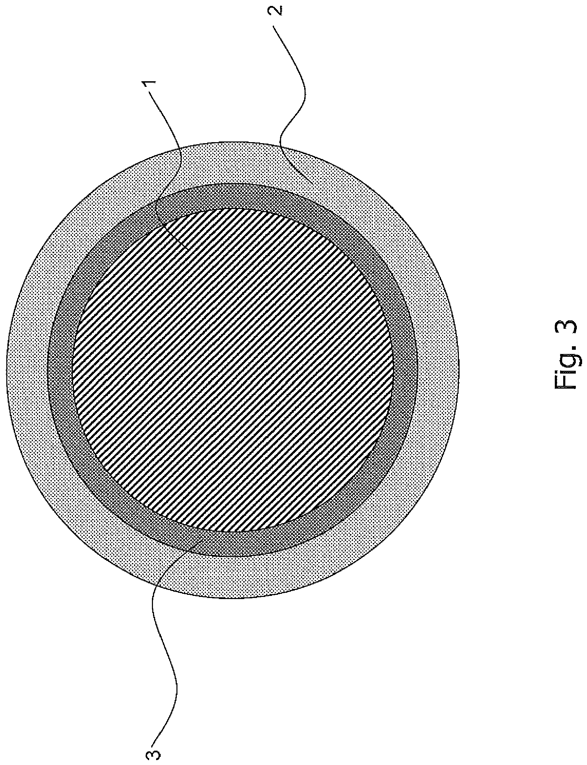

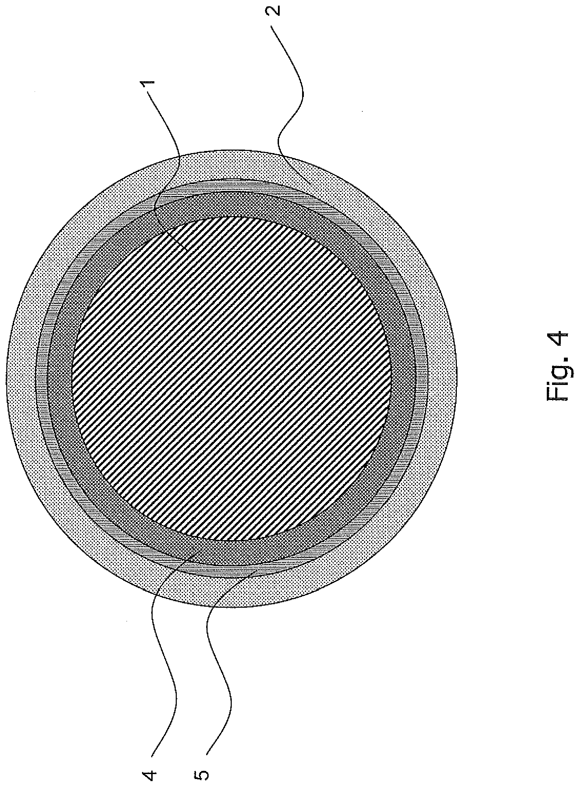

Figur 3 zeigt einen Querschnitt eines als Laserleiter ausgebildeten Lichtleiters mit einem Glasfaserkern 1, einem den Glasfaserkern umgebenden Cladding 2 und einer zwischen dem Glasfaserkern und dem Cladding angeordneten Zwischenschicht 3. Die Dicke des Claddings ist in diesem Beispiel aus Gründen einer übersichtlichen Darstellung stark reduziert. Bei realen Lichtleitfasern oder Laserfasern weist das Cladding eine Dicke auf, deren Wert mindestens in etwa der Größe des Radius des Glasfaserkerns entspricht. Die optische Dichte und damit die Brechzahl nimmt von dem Glasfaserkern in Richtung des Claddings ab.
Die Zwischenschicht ist zweckmäßigerweise so dotiert, dass in dem durch diese gebildeten Übergangsbereich zwischen dem relativ hochdotierten Kern auf den undotierten Claddingbereich die zwischen dem Kern und dem Cladding auftretenden mechanischen Spannungen nicht sprungartig sondern stufenförmig übertragen und dabei reduziert werden. Allerdings darf die Dotierung der Zwischenschicht nicht die Lichtleitung im Laserkern stören. Dieser Forderung wird dadurch genügt, indem die Brechzahlerhöhung der eingesetzten Zwischenschichtdotierung durch weitere Kodotierung mit einem brechzahlreduzierenden Dotanden, mit $SiO_{1.5}F$ oder $B_2O_3$, kompensiert wird, wobei aber der beschriebene Abbau der mechanischen Spannungen weitestgehend beibehalten wird.
Zum Abbau der Spannungen in der Kern/Claddinggrenzfläche können auch mehrere Zwischenschichten zwischen dem Kern und dem Cladding eingefügt sein. Ein derartiges Beispiel zeigt Fig. 4. Bei dem hier gezeigten Faserquerschnitt ist eine erste Zwischenschicht 4 und eine zweite Zwischenschicht 5 vorgesehen. Die Dicke des Claddings ist in dieser Darstellung aus Gründen der Übersichtlichkeit ebenfalls stark reduziert.
Die Zwischenschichten sind so dotiert, dass die Werte für deren thermische Ausdehnungskoeffizienten zwischen einem höheren Ausdehnungskoeffizient des Glasfaserkerns 1 und einem im Vergleich dazu niedrigeren Ausdehnungskoeffizenten des undotierten Pumpkernes oder äußeren Claddings 2 liegen. Um die Wellenleitung des Laserkernes nicht zu stören, müssen die Zwischenschichten weiterhin so kodotiert sein, dass die aus dem Verhältnis zwischen der Dotierung und der Kodotierung resultierende Brechzahl jeder Zwischenschicht gleich der Brechzahl des Materials des Claddings 2 ist. In einem derartigen Fall bilden die Zwischenschichten optisch einen Teil des Claddings, während die optisch wirksame Querschnittsfläche des Kerns unbeeinflusst bleibt.

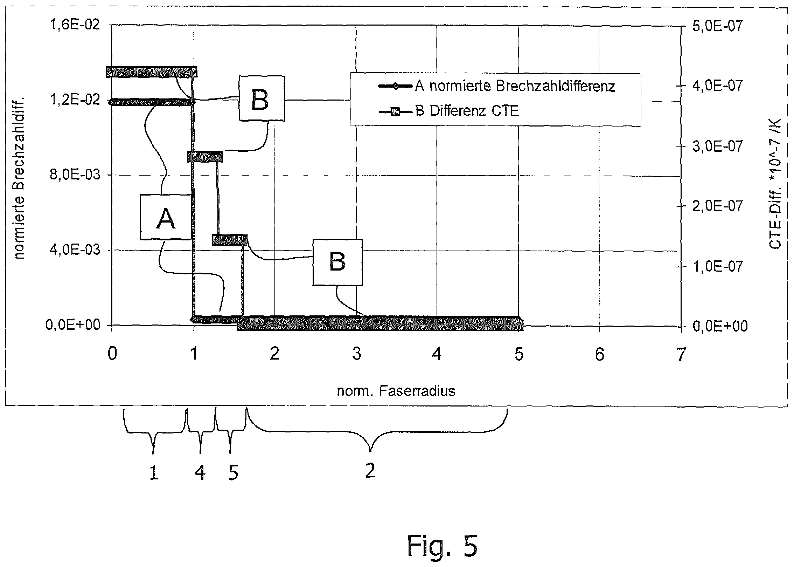

Fig. 5 zeigt einen schematischen Verlauf der normieren Brechzahl in Abhängigkeit eines auf den Kernradius a normierten Radius r/a bei einer entsprechenden Laserfaser mit zwei Zwischenschichten im Bereich des Faserkerns (r/a ≤ 1) und der sich anschließenden Zwischenschichten 4 und 5 (1≤r/a≤1,6) sowie die Differenz des thermischen Ausdehnungskoeffizienten des Glasfaserkerns und der Zwischenschichten gegenüber dem Cladding 2 aus undotiertem $SiO_2$. Anhand der Kurve A ist ersichtlich, dass beide Zwischenschichten 4 und 5 die Brechzahl des Claddings 2 aufweisen, während deren thermische Ausdehnungskoeffizienten stufenförmig zum Cladding hin abfallen, wobei deren Werte unterhalb dem des Glasfaserkerns 1 und oberhalb dem des Claddings 2 liegen, wie Kurve B zeigt.
Der Glasfaserkern der Laserfaser besteht beispielsweise aus folgenden Dotanden:

1. einem Seltenen-Erd-Element in Form von Ytterbium-III-oxid (Yb2O3) in einer Konzentration von 0,5 mol%,
2. Aluminium-III-oxid (Al2O3) als Lösungsvermittler und zur Verbesserung des Photodarkeningverhaltens der Laserfaser in einer Konzentration von 4 mol% und

Der Beitrag der Kerndotanden und ihrer Konzentrationen für den Glasfaserkern zur normierten Brechzahldifferenz gegenüber dem undotierten Cladding ist aus der folgenden Tabelle beispielhaft zu entnehmen:

| Kerndotand | Brechzahldifferenz pro mol% | Dotanden-Konzentration in mol% | Beitrag zur Kernbrechzahldifferenz |
|---|---|---|---|
| $Yb_2O_3$ | $67*10^{-4}$ | 0,5 | $33,5*10^{-4}$ |
| $Al_2O_3$ | $21,3*10^{-4}$ | 4,0 | $85,2*10^{-4}$ |
| | | Summe | $118,7*10^{-4}$ |

Für die resultierende Differenz des thermischen Ausdehnungskoeffizienten (CTE) des Glasfaserkernes CTE(Kern) bezüglich des Ausdehnungskoefizienten CTE(SiO$_2$) des Claddings berechnet man mit den Variablen x und y für die jeweiligen Dotandenkonzentrationen im Glasfaserkern gegenüber dem undotierten Cladding mit der folgenden Beziehung beispielsweise einen folgenden Wert:

$$CTE(Kern)-CTE(SiO_2)=x*CTE(Yb_2O_3)/mol\%+y*CTE(Al_2O_3)/mol\% =0,5$$
$$mol\%*4,1*10\text{^}-7 /(K*mol\%)+4,0*0,53*10\text{^}-7 /(K*mol\%) = 4,2 *10\text{^}-7 / K$$

Diese resultierende CTE-Differenz zwischen dem Glasfaserkern und dem undotierten Cladding wird nun auf die zwei Zwischenschichten 4 und 5 zweckmäßig aufgeteilt. Für die innerste, erste Zwischenschicht 4 wird beispielsweise ein Wert von 2,8 *10$^{-7}$ / K, für die zweite Zwischenschicht ein Wert von 1,4 *10$^{-7}$ / K gewählt.

Im nächsten Schritt müssen sowohl die Zwischenschichtdotanden, die Konzentration der Zwischenschichtdotanden, die Zwischenschicht-Kodotanden und die Konzentrationen Zwischenschicht-Kodotanden für jede der Zwischenschichten 4 und 5 so ermittelt werden, dass zum einen die resultierende Brechzahldifferenz jeder Zwischenschicht bezüglich der Brechzahl des Cladding verschwindet und zum anderen die jeweils geforderte CTE-Differenz in jeder Zwischenschicht erreicht wird. Dabei ist zu beachten, dass die im Glasfaserkern enthaltene Yb$_2$O$_3$-Dotierung in keiner der Zwischenschichten enthalten sein darf.

Für das Glassystem der Zwischenschichten 4 und 5 wird beispielsweise eine Dotierung aus P$_2$O$_5$ als Zwischenschichtdotand und SiF$_4$ als brechzahlkorrigierendem Zwischenschicht-Kodotanden gewählt. Dies erfolgt deswegen, weil P$_2$O$_5$ einen hinreichend hohen Anteil am CTE der Zwischenschicht bei relativ geringen Konzentrationen liefert und SiF$_4$ als brechzahlreduzierender Dotand zur Kompensation der Brechzahlerhöhung durch die P2O5-Komponente vorteilhaft verwendbar ist.

Die Zwischenschichtdotanden-Konzentration x1 und -kodotandenkonzentration y1 für die Zwischenschicht 4 bzw. die Zwischenschichtdotanden-Konzentration x2 und -Kodotandenkonzentration y2 für die Zwischenschicht 5 ergeben sich nun für jede Zwischenschicht aus folgenden Gleichungssystemen:

Für die innere, erste Zwischenschicht 4:

$$x1*dn(P_2O_5)/mol\%+y1*dn(SiF4)/mol\%=0$$

$$x1= - (y1*dn(SiF_4)/dn(P_2O_5)$$

$$x1*CTE(P_2O_5)/mol\%+y1*CTE(SiF_4)/mol\%=2,8 *10^{-7} /K$$

$$zu\ x1= 1,97\ \ mol\%\ und\ y1= 0,35\ \ mol\%,$$

und für die zweite Zwischenschicht 5:

$$x2*dn(P_2O_5)/mol\%+y2*dn(SiF_4)/mol\%=0$$

$$x2*CTE(P_2O_5)/mol\%+y2*CTE(SiF_4)/mol\%=1,4 *10^{-7} /K$$

$$zu\ x2= 0,99\ \ mol\%\ und\ y2= 0,17\ \ mol\%.$$

Die für jede Zwischenschicht geltenden Gleichungssysteme berücksichtigen dabei, dass zum einen die Beiträge der brechzahlerniedrigenden Kodotanden für jede Zwischenschicht so gewählt werden müssen, dass diese die brechzahlerhöhende Wirkung der jeweiligen Dotanden in der jeweiligen Zwischenschicht so aufheben, dass die Brechzahldifferenz in jeder Zwischenschicht bezüglich des Claddings verschwindet. Zum anderen gehen in die Gleichungssysteme jeweils die zu erreichenden Teildifferenzen des thermischen Ausdehnungskoeffizienten für jede Zwischenschicht als Parameter ein.

Eine derart gestaltete Laserfaser mit speziell dotieren Zwischenschichten für die Anwendung im Hochleistungsbereich zeichnet sich durch eine Reihe von Vorteilen aus.

Zum einen werden die mechanischen Spannungen, die durch die hohen Temperaturgradienten in der Kern/Cladding-Grenzfläche bei hohen Laserleistungen im kW-Bereich auftreten und damit zur Zerstörung der Laserfaser führen können, durch die speziell dotierten Zwischenschichten soweit vermindert, dass die Laserfaser nicht beschädigt wird. Die Wellenleitung der Laserstrahlung im Faserlaserkern wird durch die Brechzahlanpassung der Zwischenschichten an den undotierten Claddingbereich nicht gestört.

Zum anderen werden hohe mechanische Spannungen im Kern/Claddingbereich bereits bei den Heißtemperaturschritten der Preform- und Faserherstellung soweit reduziert, dass der Kern bei der Abkühlung keine mikroskopischen oder makroskopischen Risse aufweist. Risse im Faserkern würden anderenfalls die Laserstrahlung durch Streuung im Kern vermindern und die erreichbare Laserleistung signifikant reduzieren. Darüber hinaus würde die aus dem Kern gestreute Laserstrahlung im Polymercoating absorbiert. Dabei erwärmt sich das Coatingmaterial, es degradiert und führt letztendlich zur Zerstörung der Coatingschicht und damit zur Zerstörung der Laserfaser. Durch den Abbau der mechanischen Spannungen während der Preform- und Faserherstellung wird auch die Kristallisationsneigung der im allgemeinen hoch dotierten Preform-/bzw. Faserkernes vermindert.

Die erwähnte Zwischenschicht kann auch im Rahmen eines Fertigungsverfahrens der Lichtleitfaser nur vorübergehend auf dem Glasfaserkern aufgebracht sein. In einem derartigen Fall wirkt die Zwischenschicht als eine Barriereschicht, die ein Herausdiffundieren, ein Ausgasen bzw. ein Verdampfen von im Glasfaserkern enthaltenen Dotanden und Kodotanden, insbesonder Phosphor P bzw. Diphosphorpentoxid $P_2O_5$ verhindert. Dies ist besonders in Hinblick auf das Photodarkening-Verhalten der Glasfaser von Bedeutung, da ein homogener und im Verlauf der Glasfaserfertigung gleichbleibender Dotandengehalt vor allen in mit einem Seltenen-Erd-Element dotierten Glasfaserkern dem Photodarkening entgegen wirkt.

Die Zwischenschichten besitzen aber noch eine weitere sehr vorteilhafte Funktion. Durch das Aufbringen von Zwischenschichten rund um die Selten-Erddotierte Schicht, kann deren chemische Zusammensetzung durch Diffusionsprozesse gezielt verändert werden.

Für Hochleistungsfaserlaser ist eine hohe Konzentration des laseraktiven Mediums, in der vorliegenden vorteilhaften Ausgestaltung Yb, im Kern notwendig. Eine Dotierung mit Yb erhöht jedoch die Brechzahl des Kerns. In so genannten Large Mode Area-Fasern (LMA-Fasern), bei denen sich die Lichtleistung auf einen größeren Kern verteilen kann, lassen sich besonders hohe Lichtleistungsdichten transportieren. Für die effiziente Lichtleitung in solchen LMA Fasern ist jedoch ein möglichst geringer Unterschied zwischen dem Kern und der Claddingbrechzahl erforderlich. So steht das Bedürfnis einer hohen Yb- Konzentration im Kern und der möglichst geringe Brechzahlunterschied sich konträr gegenüber.

Es hat sich jedoch gezeigt, dass fluordotierte Zwischenschichten dieses Problem auf elegante Weise lösen. Fluor in den aktiven Kern einzubringen, um die durch das laseraktive Element erhöhte Brechzahl zu kompensieren, wird allgemein angewendet. Eine direkte Dotierung des Lasermediums mit Fluor ist jedoch problematisch, da sich leicht flüchtige Verbindungen wie $YbF_3$, $AlF_3$ und/oder $PF_3$ bilden, die beim Verschmelzen der Schichten den Kern verlassen. Der Fluoreinbau auf diese Weise ist somit stark limitiert.

Überraschenderweise hat sich gezeigt, dass eine wesentlich höhere Konzentration von Fluor im Kern möglich ist, wenn sowohl an der äußeren als auch an der inneren Grenzfläche des aktiven Kerns wenigstens eine, vorteilhafterweise zwei fluorhaltige Zwischenschichten abgeschieden werden. Die das Lasermedium enthaltende Schicht, aus der nach Konsolidierung der aktive Kern entsteht, ist somit auf beiden Seiten von diesen Zwischenschichten umgeben. In Folge weiterer Temperaturbehandlungs - und/oder -bearbeitungsschritte, vorteilhafterweise des Kollabierprozesses, erfolgt eine Diffusion von Fluor in die das Lasermedium enthaltende Kernschicht. Die flüchtigen Verbindungen, wie beispielsweise $YbF_3$, $AlF_3$ oder ähnliche, können nicht gebildet werden und/oder können diese Schicht nicht mehr verlassen. Die innere Zwischenschicht wird im Zuge des letzten Kollabierschrittes, vor dem Schließen des beschichteten Rohres, entfernt.

Dadurch ist es möglich, die Fluorkonzentration im aktiven Kern in beträchtlichem Maß zu steigern und somit die Yb-Konzentration ohne eine Steigerung der Brechzahl zu erhöhen. Dieses Verfahren ist nicht auf das Beispiel von Yb und Fluor begrenzt, sondern kann vom Fachmann mit anderen Elementkombinationen analog angewendet werden.

Die erfindungsgemäße Lichtleitfaser wurde anhand von Beispielen näher erläutert. Im Rahmen fachmännischen Handelns sind weitere Ausgestaltungen möglich. Diese ergeben sich aus den Unteransprüchen.

Bezugszeichenliste

1  Glasfaserkern
2  Cladding
3  Zwischenschicht
4  erste Zwischenschicht

5    zweite Zwischenschicht

**Patentansprüche**

**1.** Lichtleitfaser enthaltend einen dotierten Glasfaserkern (1) und ein den Glasfaserkern umgebendes Cladding (2) mit einem vom Faserkern zum umgebenden Cladding abnehmenden Brechzahlprofil, mit einer zwischen dem Glasfaserkern und dem Cladding angeordneten, mechanische Spannungen zwischen dem Glasfaserkern und dem Cladding reduzierenden Zwischenschichtanordnung, wobei die Zwischenschichtanordnung eine einen stufenförmigen mechanischen Spannungsverlauf zwischen dem Glasfaserkern (1) und dem Cladding (2) sichernde Zwischenschichtdotierung und eine einer brechzahlerhöhenden Wirkung der Zwischenschichtdotierung entgegenwirkende brechzahlreduzierende Zwischenschicht-Kodotierung aufweist, wobei
die Zwischenschichtanordnung aus einer ersten Zwischenschicht (4) und einer zweiten Zwischenschicht (5) besteht, wobei die Werte der thermischen Ausdehnungskoeffizienten der ersten Zwischenschicht (4) und der zweiten Zwischenschicht (5) ein stufenförmiges Profil aufweisen, bei dem die thermischen Ausdehnungskoeffizienten der beiden Zwischenschichten (4) und (5) von einem höheren Ausdehnungskoeffizienten des Glasfaserkerns (1) zu einem niedrigeren Ausdehnungskoeffizienten des Claddings (2) stufenförmig zum Cladding hin abfallen, so dass deren Werte unterhalb dem des Glasfaserkerns (1) und oberhalb dem des Claddings (2) liegen, und ein unterschiedliches Mengenverhältnis zwischen dem Zwischenschichtdotanten und dem Zwischenschicht-Kodotanden in der ersten und der zweiten Zwischenschicht vorgesehen ist, so dass die beiden Zwischenschichten (4) und (5) die Brechzahl des Claddings (2) aufweisen.

**2.** Lichtleitfaser nach Anpruch 1, **dadurch gekennzeichnet, dass**
der Glasfaserkern (1) eine Kerndotierung mit einem Kerndotanden, enthaltend wenigstens ein aktives Lasermedium, vorzugsweise ein Selten-Erd-Element und/oder ein d-Gruppenelement, und einem Lösungsvermittler aufweist.

**3.** Lichtleitfaser nach Anspruch 2, **dadurch gekennzeichnet, dass**
der Kerndotand Ytterbiumoxid ist und/oder der Lösungsvermittler ein Oxid eines Elementes, vorzugsweise der dritten und/oder fünften Hauptgruppe ist.

**4.** Lichtleitfaser nach einem der vorhergehenden Ansprüche,
**dadurch gekennzeichnet, dass**
die Zwischenschichtdotierung einen Zwischenschichtdotanten in Form eines Oxids eines Elementes vorzugsweise der dritten und/oder fünften Hauptgruppe enthält und/oder die Zwischenschicht-Kodotierung einen Zwischenschicht-Kodotanten in Form eines Halogenids, vorzugsweise eines Fluorids, enthält.

**5.** Lichtleitfaser nach einem der vorhergehenden Ansprüche,
**dadurch gekennzeichnet, dass**
zwischen der Zwischenschicht und der vorgesehenen Kernschicht wenigstens eine Diffusionszone ausgebildet ist, in welcher wenigstens ein Inhaltsstoff in oder aus der Kernschicht ein- oder ausdiffundiert ist.

**6.** Lichtleitfaser nach Anspruch 5, **dadurch gekennzeichnet, dass**
die Konzentration des Inhaltsstoffes einen radialen Gradienten aufweist.

**7.** Lichtleitfaser nach Anspruch 6, **dadurch gekennzeichnet, dass**
die Konzentration des Inhaltsstoffes den Kern gleichmäßig durchsetzt.

**Claims**

**1.** Optical fiber containing a doped glass fiber core (1) and a cladding (2) surrounding the glass fiber core with a refraction index profile decreasing from the fiber core to the surrounding cladding, having an intermediate layer arrangement disposed between the glass fiber core and the cladding and reducing mechanical tensions between the glass fiber core and the cladding, wherein the intermediate layer arrangement has an intermediate layer doping ensuring a stepped mechanical stress flow between the glass fiber core (1) and the cladding (2), and an intermediate layer co-doping reducing the refraction index and counteracting a refraction index increasing effect of the intermediate layer doping, wherein
the intermediate layer arrangement consists of a first intermediate layer (4) and a second intermediate layer (5), wherein the values of the thermal expansion coefficients of the first intermediate layer (4) and the second intermediate layer (5) have a stepped profile, in which the thermal expansion coefficients of the two intermediate layers (4) and (5) decrease from a higher expansion coefficient of the glass fiber core (1) to a lower expansion coefficient of the cladding (2) in a stepped manner toward the cladding, so that the values thereof are below that of the glass fiber core (1) and above that of the cladding (2), and a different quantity ratio being provided between the intermediate layer dopant and the intermediate layer co-dopant in the first and second intermediate layers so that the two intermediate layers (4) and (5) exhibit the refraction index of the cladding (2).

2. Optical fiber according to claim 1,
**characterized in that**
the glass fiber core (1) has a core doping with a core dopant containing at least one active laser medium, preferably a rare earth element and/or a d-group element, and a solubilizer.

3. Optical fiber according to claim 2,
**characterized in that**
the core dopant is ytterbium oxide and/or the solubilizer is an oxide of an element, preferably of the third and/or fifth main group.

4. Optical fiber according to anyone of the preceding claims,
**characterized in that**
the intermediate layer doping contains an intermediate layer dopant in the form of an oxide of an element preferably of the third and/or fifth main group and/or the intermediate layer co-doping contains an intermediate co-dopant in the form of a halide, preferably a fluoride.

5. Optical fiber according to anyone of the preceding claims,
**characterized in that**
at least one diffusion zone, into which at least one ingredient is diffused into or from the core layer, is formed between the intermediate layer and the provided core layer.

6. Optical fiber according to claim 5,
**characterized in that**
the concentration of the ingredient exhibits a radial gradient.

7. Optical fiber according to claim 6,
**characterized in that**
the concentration of the ingredient uniformly permeates the core.

**Revendications**

1. Fibre optique comportant un coeur de fibre de verre dopé (1) et une gaine (2) entourant ledit coeur de fibre de verre, présentant un profil d'indice de réfraction qui diminue depuis le coeur de fibre jusqu'à la gaine qui l'entoure, et comportant un agencement de couches intermédiaires agencé entre le coeur de fibre de verre et la gaine et réduisant des contraintes mécaniques entre le coeur de fibre de verre et la gaine,
dans laquelle
l'agencement de couches intermédiaires présente un dopage de couche intermédiaire assurant une évolution de contrainte mécanique en forme étagée entre le coeur de fibre de verre (1) et la gaine (2), et un co-dopage de couche intermédiaire réduisant l'indice de réfraction et s'opposant à un effet d'augmentation de l'indice de réfraction du dopage de la couche intermédiaire,
l'agencement de couches intermédiaires est constitué d'une première couche intermédiaire (4) et d'une seconde couche intermédiaire (5), les valeurs des coefficients de dilatation thermique de la première couche intermédiaire (4) et de la seconde couche intermédiaire (5) présentant un profil en gradins dans lequel les coefficients de dilatation thermique des deux couches intermédiaires (4) et (5) diminuent en gradins vers la gaine pour passer d'un coefficient de dilatation plus élevé du coeur de fibre de verre (1) à un coefficient de dilatation plus faible de la gaine (2), de sorte que leurs valeurs sont inférieures à celle du coeur de fibre de verre (1) et supérieures à celle de la gaine (2), et il est prévu un rapport quantitatif différent entre le dopant de couche intermédiaire et le co-dopant de couche intermédiaire dans la première et dans la seconde couche intermédiaire, de sorte que les deux couches intermédiaires (4) et (5) présentent l'indice de réfraction de la gaine (2).

**2.** Fibre optique selon la revendication 1,
**caractérisée en ce que**
le coeur de fibre de verre (1) présente un dopage de coeur avec un dopant de coeur, contenant au moins un milieu laser actif, de préférence un élément de terre rare et/ou un élément du groupe d, et avec un agent solubilisant.

**3.** Fibre optique selon la revendication 2,
**caractérisée en ce que**
le dopant de coeur est un oxyde d'ytterbium et/ou l'agent solubilisant est un oxyde d'un élément, de préférence parmi le troisième et/ou le cinquième groupe principal.

**4.** Fibre optique selon l'une des revendications précédentes,
**caractérisée en ce que**
le dopage de couche intermédiaire contient un dopant de couche intermédiaire sous la forme d'un oxyde d'un élément de préférence parmi le troisième et/ou le cinquième groupe principal, et/ou le co-dopage de couche intermédiaire contient un co-dopant de couche intermédiaire sous la forme d'un halogénure, de préférence d'un fluorure.

**5.** Fibre optique selon l'une des revendications précédentes,
**caractérisée en ce que**
au moins une zone de diffusion est réalisée entre la couche intermédiaire et la couche de coeur prévue, zone dans laquelle au moins un composant est entré ou sorti par diffusion dans ou hors de la couche de coeur.

**6.** Fibre optique selon la revendication 5,
**caractérisée en ce que**
la concentration du composant présente un gradient radial.

**7.** Fibre optique selon la revendication 6,
**caractérisée en ce que**
la concentration du composant traverse régulièrement le coeur.

Stand der Technik

Fig. 1

EP 2 441 139 B1

## Stand der Technik

Fig. 2

Fig. 3

Fig. 4

EP 2 441 139 B1

Fig. 5

EP 2 441 139 B1

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• GB 2273389 A

**In der Beschreibung aufgeführte Nicht-Patentliteratur**

• **F.JUST ; H.-R. MÜLLER ; H-BARTELT.** Mechanical stresses in rare-earth doped fiber preforms. *DGaO-Proceedings,* 2008
• **CHIN-LIN CHEN.** Foundations for guided-wave optics. Wiley Interscience, 2007, 283
• **S.JETSCHKE.** Photodarkening in Yb-dotierten Lichtleitfasern. *IPHT Vortrag,* 13. Juni 2008
• **D.C.BROWN ; H.J.HOFFMANN.** Thermal, Stress, and Thermo-Optic Effects in High Average Power Double-Clad Silica Fiber Lasers. *IEEE Journal of Quantum Electronics,* 02. Februar 2001, vol. 37, 207-217
• **C.C.DE ARAUJO ; L.ZHANG ; H-ECKERT.** Sol-gel preparation of AlPO4-SiO2 glasses with high surface mesoporous structure. *J.Mater.Chem.,* 2006, vol. 16, 1323-1331